# DEMANDE DE BREVET EUROPEEN

(11) **EP 1 372 239 A1**
(43) Date de publication de la demande: **17.12.2003**
(21) Numéro de dépôt: 03354042.8
(22) Date de dépôt: 14.05.2003
(51) Int. Cl.: H02J 3/18

(54) **Conditionneur de reseau electrique**

(30) Priorité: 12.06.2002 FR 0207207
(71) Demandeur: MGE UPS Systems (S.A.), 38334 Saint-Ismier Cédex (FR)
(72) Inventeur: Fiorina, Jean-Noel c/o Schneider Elec. Indus. SAS, 38050 Grenoble cedex 09 (FR); Rozand, Daniel c/o Schneider Elec. Indus. SAS, 38050 Grenoble (FR)
(74) Mandataire: Tripodi, Paul

(57) **Abrégé**

Le conditionneur de réseau comporte des moyens de transformation ayant au moins une entrée (31) destinée à être connectée à un réseau électrique (4) et au moins une sortie (32) ayant deux lignes destinées à être connectées en série dans une ligne (35) de distribution pour appliquer une tension de compensation (Vc) destinée à compenser des variations de tension d'une ligne de réseau. Les moyens de transformation comportent des premiers moyens de conversion (42) connectés à l'entrée (31) et comportant un premier convertisseur (43) haute fréquence, et des seconds moyens de conversion (110) pour fournir la tension de compensation (Vc) et comportant un second convertisseur (112) haute fréquence. Les moyens de conversion sont reliés par un transformateur (46) haute fréquence comportant un premier enroulement (52) connecté audit premier convertisseur (43) et un second enroulement (111) connecté audit second convertisseur (112).

## Description

### DOMAINE TECHNIQUE

L'invention concerne un conditionneur de réseau comportant des moyens de transformation ayant au moins une entrée destinée à être connectée à un réseau électrique et au moins une sortie ayant deux lignes destinées à être connectées en série dans une ligne de distribution pour appliquer une tension de compensation destinée à compenser des variations de tension d'une ligne de réseau.

### ETAT DE LA TECHNIQUE

Les conditionneurs de réseau de types connus comportent souvent un transformateur ou un autotransformateur permettant d'augmenter ou de réduire une tension à appliquer à une charge. D'autres conditionneurs de réseau sont basés sur une technologie d'onduleur comportant un chargeur pour charger une batterie d'accumulateur, et un convertisseur pour convertir une tension continue de la batterie en tension alternative. Dans ce cas, ladite tension alternative est destinée à compenser des variations de tension électrique d'une source et à appliquer une tension régulée à un réseau aval de distribution électrique.

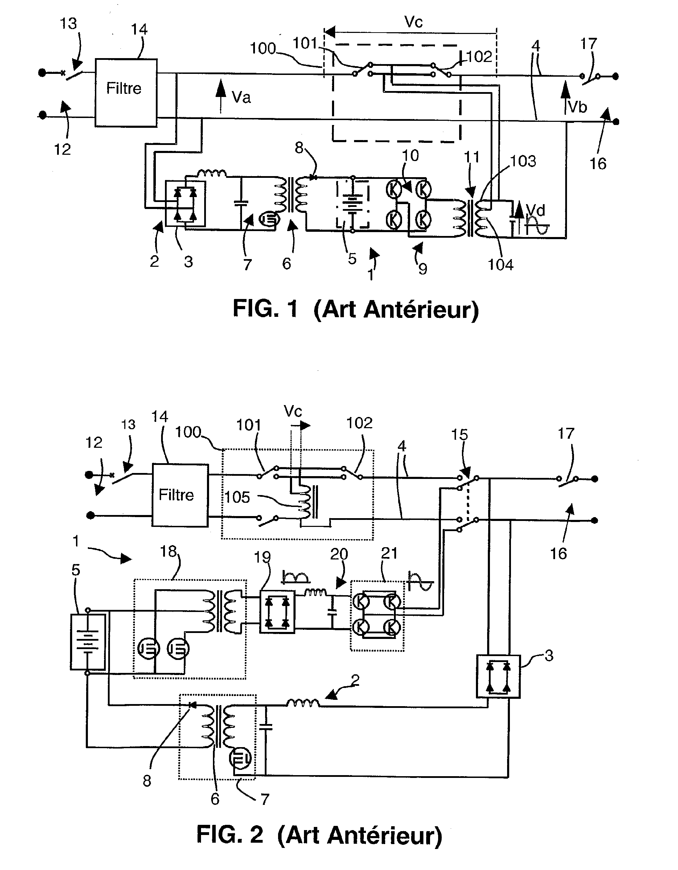

Un schéma d'un conditionneur de réseau de type connu basé sur un onduleur 1 comportant un transformateur élévateur basse fréquence est représenté sur la figure 1. L'onduleur comporte un chargeur 2 comportant un redresseur 3 connecté à un réseau aval de distribution électrique 4, un circuit hacheur 7 commandant un transformateur 6 en alimentation à découpage. Une batterie d'accumulateur 5 est alimentée par le chargeur 2 à travers son transformateur 6 et un redresseur 8. Un convertisseur 9 connecté entre la batterie 5 et le réseau 4 convertit la tension continue de la batterie en tension alternative à appliquer au réseau 4. Le convertisseur 9 comporte un onduleur 10 basse fréquence à semi-conducteurs de puissance commandant un transformateur 11 à la fréquence du réseau.

L'onduleur 10 ayant une basse fréquence fondamentale peut être commandé en modulation de largeur d'impulsion haute fréquence.

Le conditionneur de la figure 1 comporte un circuit de compensation 100 comportant des commutateurs 101 et 102 pour compenser les variations d'une tension Va d'une ligne d'arrivée 12 d'un réseau amont en mettant en série avec la tension Va de la ligne d'arrivée une tension Vc de compensation. Une tension Vb ainsi compensée est appliquée au réseau 4 en aval pour alimenter une charge en tension de bonne qualité et stable. Le transformateur 11 basse fréquence a un enroulement de sortie 103 basse tension permettant de fournir une tension de compensation Vc, par exemple cette tension peut être de l'ordre de quinze pour cent (15%) de la tension nominale de la tension du réseau Va ou Vb. Ainsi, selon la position des commutateurs 101 et 102 la tension Vb peut être égale à Va, Va+Vc, Va-Vc. Si la tension Va devient trop faible, l'onduleur fournit alors en mode de fonctionnement onduleur une tension Vd appliquée directement au réseau 4 en aval. La tension Vd est fournie par un enroulement 104 pleine tension du transformateur 11 basse fréquence.

Sur la figure 2, le réseau comporte une ligne d'arrivée 12, un disjoncteur 13 et un filtre 14 connectés en série sur au moins un conducteur de la ligne d'arrivé, un commutateur 15 de sortie pour commuter une ligne de sortie 16 sur une tension de la ligne d'entrée ou sur une tension fournie par l'onduleur si la ligne d'entrée est défaillante, et un relais 17 de sortie.

Ce type d'onduleur basé sur l'utilisation d'un transformateur 11 basse fréquence est lourd et volumineux. De plus, un tel onduleur nécessite un chargeur de batterie 2 indépendant.

Il existe des conditionneurs de réseau de type connu basés sur des onduleurs ayant un transformateur haute fréquence pour convertir la tension continue d'une batterie en une tension élevée à appliquée au réseau 4. Un tel conditionneur est représenté sur la figure 2. Sur ce schéma, l'onduleur comporte un chargeur 2 pour charger la batterie 5, un convertisseur 18 haute fréquence connecté à la batterie pour convertir une tension continue de batterie en une tension haute fréquence, un redresseur 19 pour redresser la tension haute fréquence, un dispositif de filtrage 20 pour filtrer la tension redressée, et un convertisseur 21 basse fréquence connecté entre le dispositif de filtrage 20 ou le redresseur et le réseau pour fournir une tension sinusoïdale au réseau.

Ces onduleurs ou alimentations sans interruption sont moins lourds que les onduleurs à transformateurs basse fréquence, mais la puissance dissipée dans les composants des convertisseurs et des hacheurs reste très élevée.

De plus, des surtensions dues aux charges électriques notamment réactives peuvent apparaître sur les sorties des onduleurs ou des alimentations sans interruption et par conséquent augmenter les contraintes sur les composants électroniques de puissance. Pour absorber cette énergie de retour et assurer une forme d'onde sinusoïdale pour tout type de charge, certaines alimentations sans interruption comportent des contrôleurs pour commander le chargeur en mode de récupération. Une telle alimentation sans interruption est décrit dans le brevet US6094363.

Cependant, la commande d'un chargeur en recyclage ne suffit pas à absorber une part importante de l'énergie de retour de charge lorsque les onduleurs sont de très forte puissance. De plus, des chargeurs de forte puissance nécessaire à cette fonction sont volumineux et coûteux.

Sur le schéma de la figure 2, la tension de compensation Vc est générée par un autotransformateur basse fréquence 105 ayant un enroulement basse tension connecté aux deux commutateurs 101 te 102 pour ajouter ou enlever une valeur de tension Vc à la tension de ligne Va. Un tel autotransformateur fournissant une puissance de l'ordre de vingt pour cent (20%) de la puissance nominale de l'installation ou de la charge à alimenter est encore volumineux et coûteux, notamment lorsque la puissance de l'installation devient très importante.

### EXPOSE DE L'INVENTION

L'invention a pour but un conditionneur de réseau électrique amélioré évitant les problèmes de l'état de la technique notamment en ayant une réduction notable du volume, et du poids et des contraintes électriques réduites sur les composants électroniques de puissance.

Dans un conditionneur de réseau électrique selon l'invention, les moyens de transformation comportent :
- des premiers moyens de conversion connectés à ladite entrée et comportant un premier convertisseur haute fréquence,
- des seconds moyens de conversion connectés à ladite sortie pour appliquer 1a tension de compensation et comportant un second convertisseur haute fréquence, et
- un transformateur haute fréquence comportant un premier enroulement connecté audit premier convertisseur haute fréquence et un second enroulement connecté audit second convertisseur haute fréquence.

Dans un mode de réalisation préférentiel, le conditionneur comporte des moyens de synchronisation connectés au premier convertisseur haute fréquence et au second convertisseur haute fréquence pour fournir des signaux de synchronisation.

De préférence, au moins un semi-conducteur de puissance du premier convertisseur haute fréquence est commandé en conduction pendant la conduction d'au moins un semi-conducteur de puissance du second convertisseur haute fréquence.

Dans un mode de réalisation particulier, les premiers moyens de conversion comportent un premier convertisseur basse fréquence et les seconds moyens de conversion comportent un second convertisseur basse fréquence. Avantageusement, le premier convertisseur basse fréquence est associé audit premier convertisseur haute fréquence. Avantageusement, le second convertisseur basse fréquence est associé audit second convertisseur haute fréquence.

De préférence, les premiers moyens de conversion comportent une inductance connectée entre le premier convertisseur haute fréquence et le premier convertisseur basse fréquence.

De préférence, les premiers moyens de conversion sont réversibles et/ou les seconds moyens de conversion sont réversibles.

Avantageusement, le second convertisseur basse fréquence est commandé pour orienter une tension de compensation en l'additionnant ou en la soustrayant à une tension d'entrée.

Dans un mode particulier de réalisation, le conditionneur comporte des troisièmes moyens de conversion connectés à un troisième enroulement dudit transformateur haute fréquence et à des moyens de stockage d'énergie électrique.

Avantageusement, les premiers moyens de conversion, le transformateur haute fréquence et les troisièmes moyens de conversion permettent de charger les moyens de stockage dans un mode de fonctionnement chargeur réversible.

De préférence, les premiers moyens de conversion, le transformateur haute fréquence et les troisièmes moyens de conversion permettent de convertir une tension des moyens de stockage en une tension alternative à fournir à un réseau dans un mode fonctionnement onduleur réversible.

Avantageusement, le premier convertisseur haute fréquence et les troisièmes moyens de conversion reçoivent des signaux de synchronisation pour faire fonctionner le premier convertisseur haute fréquence en redresseur synchrone.

De préférence, le conditionneur comporte des moyens de contrôle pour commander les premiers, les seconds et les troisièmes moyens de conversion en mode de fonctionnement conditionneur, en mode fonctionnement chargeur ou en mode fonctionnement onduleur.

De préférence, les moyens de contrôle comportent des moyens de commande :
- pour commander les premiers et les seconds moyens de conversion en mode de fonctionnement conditionneur si une tension d'entrée est entre un premier seuil et un second seuil et entre un troisième seuil et un quatrième seuil,
- pour commander les premiers, les seconds et les troisièmes moyens de conversion en mode de fonctionnement onduleur si ladite tension d'entrée est inférieure audit premier seuil et supérieure audit quatrième seuil, et
- pour sélectionner un mode fonctionnement normal si la tension de ladite tension d'entrée est entre le second seuil et le troisième seuil.

Avantageusement, le conditionneur peut comporter des moyens de contrôle pour commander les premiers, les seconds et les troisièmes moyens de conversion en filtre actif pour corriger des distorsion de tension par rapport à une forme sinusoïdale.

Avantageusement, les premiers, les seconds et les troisièmes moyens de conversion comportent des semi-conducteurs de puissance comportant au moins un élément actif de type transistor associé à une diode connectée en parallèle et en inverse.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- les figures 1 et 2 représentent des schémas de conditionneurs de réseau de l'art antérieur ;
- les figures 3 et 4 représentent des schémas bloc de conditionneurs selon des modes de réalisation de l'invention ;
- la figure 5 représente un schéma détaillé d'un conditionneur selon un mode de réalisation de l'invention;
- les figure 6 à 12 représentent des variantes de premiers et troisièmes circuits de conversion mis en oeuvre dans des conditionneurs selon des modes de réalisation de l'invention ;
- les figure 13 à 15 représentent des variantes de seconds circuits de conversion mis en oeuvre dans des conditionneurs selon des modes de réalisation de l'invention ;
- la figure 16 représente un schéma bloc d'un conditionneur selon un mode de réalisation de l'invention comportant un circuit de contrôle centralisé ;
- la figure 17 représente un schéma détaillé des circuits de puissance des circuits de conversion d'un conditionneur selon un mode de réalisation de l'invention ;
- la figure 18 représente des signaux de courant et de tension dans un conditionneur selon un mode de réalisation de l'invention fonctionnant en mode onduleur ;
- la figure 19 représente des signaux de courant et de tension dans un conditionneur selon un mode de réalisation de l'invention fonctionnant en mode chargeur ;
- la figure 20 représente des signaux de courant et de tension dans un conditionneur selon un mode de réalisation de l'invention fonctionnant en mode conditionneur de réseau avec une tension de compensation soustraite ;
- la figure 21 représente des signaux de courant et de tension dans un conditionneur selon un mode de réalisation de l'invention fonctionnant en mode conditionneur de réseau avec une tension de compensation ajoutée ;
- la figure 22 représente des signaux de courant et de tension et de commande haute fréquence dans un conditionneur selon un mode de réalisation de l'invention ;
- la figure 23 représente un organigramme de fonctionnement d'un conditionneur de réseau selon un mode de réalisation de l'invention; et
- la figure 24 représente des sélections de mode de fonctionnement en fonction d'une tension d'entrée.

### DESCRIPTION DETAILLEE DE MODES DE REALISATION PREFERES

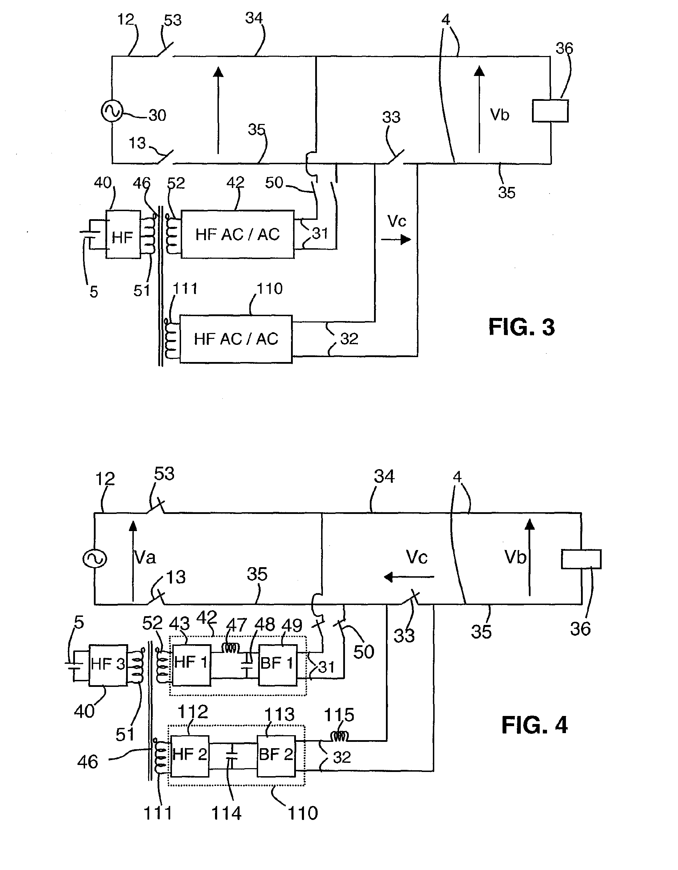

Dans un conditionneur de réseau selon un mode de réalisation de l'invention représenté sur la figure 3, les moyens de transformation comportent un premier circuit de conversion 42 connecté à un premier enroulement 52 d'un transformateur haute fréquence 46 et un second circuit de conversion 110 connecté à un second enroulement 111 dudit transformateur haute fréquence 46. Le premier circuit de conversion 42 comporte une entrée 31 connectée à au moins deux lignes 34 et 35 pour recevoir une tension Va d'une ligne de réseau en amont du conditionneur. Le second circuit de conversion 110 comporte une sortie 32 ayant au moins deux lignes destinées à être connectées en série avec une ligne 35 du réseau pour insérer une tension de compensation Vc.

Sur le schéma simplifié de la figure 4, une source de tension 30 alimente une ligne d'arrivée 12 et un réseau 4 à travers un disjoncteur 13. La tension Va en amont du réseau peut être perturbée par variations de tension. Cette tension est appliquée à l'entrée 31 du premier circuit de conversion 42 à travers un interrupteur 50. Le premier circuit de conversion 42 comporte un premier convertisseur 43 haute fréquence connecté au premier enroulement 52 du transformateur 46 haute fréquence pour établir un flux électromagnétique haute fréquence avec le second enroulement 111 du transformateur 46. Le second circuit de conversion 110 comporte un second convertisseur haute fréquence connecté à l'enroulement 111 pour contribuer à générer une tension Vc de compensation. Les deux lignes de la sortie 32 du second circuit de conversion sont connectées en série dans la ligne 35 pour ajouter ou soustraire la tension de compensation. Un interrupteur 33 connecté sur les lignes de la sortie 32 permet de court-circuiter ladite sortie lorsque le conditionneur ne fonctionne pas en mode conditionneur. Ainsi, une tension Vb appliquée à une charge 36 connectée au réseau 4 en aval du conditionneur résulte des tensions Va et Vc soit Vb=Va+Vc ou Vb=Va-Vc selon le sens de la compensation.

Si la tension Va est plus basse que la tension nominale du réseau, par exemple en dessous d'un seuil Vs1, une tension Vc est ajoutée à la tension Va pour que la tension Vb ait une tension proche la tension nominale. Dans ce cas, un courant est prélevé sur l'entrée du premier circuit de conversion. Après transformation, le courant est transformé en une tension Vc à ajouter à la tension Va.

Si la tension Va est plus élevée que la tension nominale du réseau, par exemple au dessus d'un seuil Vs4, une tension Vc est soustraite à la tension Va pour que la tension Vb ait une tension proche la tension nominale.

Pour permettre un fonctionnement en onduleur, un troisième circuit de conversion 40 haute fréquence est connecté entre un troisième enroulement 51 du transformateur haute fréquence 46 et une batterie 5 d'accumulateur. Avantageusement, le troisième circuit de conversion fonctionne de manière synchrone et réversible avec le premier convertisseur haute fréquence pour assurer un fonctionnement en mode onduleur dans un premier sens et un fonctionnement en mode chargeur de batterie ou réversible dans un sens opposé.

Dans le conditionneur de réseau représenté sur la figure 4, le premier circuit de conversion 42 comporte un premier convertisseur 43 haute fréquence connecté à l'enroulement 52, un premier convertisseur basse fréquence 49 connectée au réseau 4 à travers les entrées 31, une inductance 47 et un condensateur 48 connectés entre le premier convertisseur haute fréquence et le premier convertisseur basse fréquence. Le second circuit de conversion 110 comporte un second convertisseur 112 haute fréquence connecté à l'enroulement 111, un second convertisseur 113 basse fréquence connecté en sortie 32 en série sur la ligne 35, un condensateur de filtrage 114 est connecté en parallèle entre les convertisseurs 112 et 113. Une inductance 115 de filtrage peut aussi être connectée à une sortie du convertisseur 113 pour améliorer le filtrage de la tension de compensation.

Lorsque l'interrupteur 33 est ouvert, le conditionneur peut fonctionner en mode de fonctionnement conditionneur en appliquant une tension Vc de compensation. Cette tension peut de préférence compenser jusqu'à plus ou moins vingt pour cent de la tension nominale prévue à appliquer en aval du réseau. Cependant un conditionneur selon un mode de réalisation de l'invention peut aussi fonctionner en mode onduleur et chargeur de batterie. En mode chargeur de batterie, le premier circuit de conversion et le troisième circuit de conversion alimente la charge de la batterie. Pour un fonctionnement en mode onduleur, par exemple lorsque la tension Va disparaît ou devient trop basse, un interrupteur de ligne 53 est ouvert, l'interrupteur 33 est fermé et le premier et le troisième circuit de conversion fournissent au réseau une tension alternative de secours.

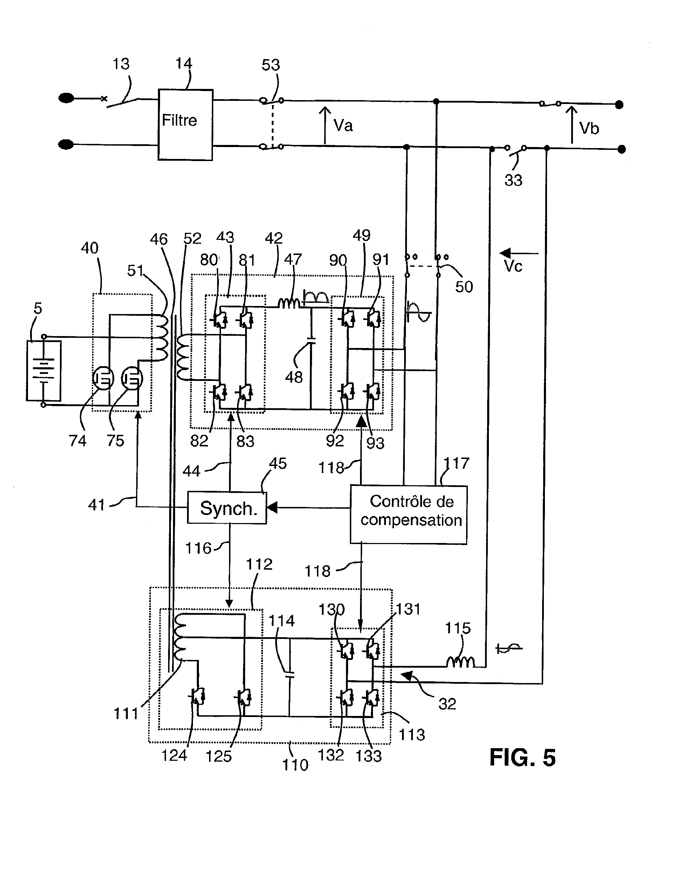

Le schéma détaillé d'un conditionneur selon un mode de réalisation de l'invention est représenté sur la figure 5. Il comporte un circuit de synchronisation 45 pour fournir des commandes de synchronisation 41 au troisième circuit de conversion 40 haute fréquence, des commandes de synchronisation 44 au premier convertisseur haute fréquence et des commandes de synchronisation 116 au second convertisseur haute fréquence 112. L'association des commandes de synchronisation 41 et 44 permet de synchroniser le fonctionnement en mode chargeur et le fonctionnement en mode onduleur des convertisseurs haute fréquence 40 et 43, notamment pour effectuer un redressement synchrone. L'association des commandes de synchronisation 44 et 116 permet de synchroniser le fonctionnement en mode conditionneur pouvant fonctionner de manière bidirectionnelle, soit en ajoutant une tension de compensation soit en soustrayant une tension de compensation.

En mode de fonctionnement conditionneur, les polarités des tensions sur l'entrée du premier convertisseur basse fréquence 49 et sur la sortie du second convertisseur basse fréquence 113 sont contrôlées par un circuit 117 de contrôle de compensation qui envoie des commandes de contrôle 118. Le circuit de contrôle de compensation 117 commande aussi le circuit de synchronisation 45 pour contrôler le sens de la compensation consistant à ajouter ou à soustraire la tension de compensation. Il permet également de contrôler le sens de transfert de l'énergie électrique.

Dans un fonctionnement en mode onduleur, le troisième convertisseur 40 haute fréquence et le premier convertisseur 43 fonctionnent en mode synchrone. Par exemple, un premier semi-conducteur du convertisseur 40 est commandé en conduction pendant la conduction d'un premier semi-conducteur du convertisseur 43 et un second semi-conducteur du convertisseur 40 est commandé en conduction pendant la conduction d'un second semi-conducteur du convertisseur 43. Avantageusement, les premier et second semi-conducteurs du convertisseur 43 fonctionnent en alternance.

Sur la sortie du premier convertisseur 43 fonctionnant en mode de redresseur synchrone, la tension a, de préférence, une enveloppe de forme sensiblement sinusoïdale redressée. La tension haute fréquence en sortie du convertisseur 43 est lissée par l'inductance 47 et le condensateur 48. Le convertisseur 49 basse fréquence permet de fournir, par exemple, une tension alternative sinusoïdale en alternant des demi-alternances de la tension redressée et lissée fournies par le premier convertisseur haute fréquence 43 fonctionnant en mode de redresseur synchrone. Un commutateur 50 relie le convertisseur 49 au réseau 4.

Avantageusement, selon un mode de réalisation de l'invention, le premier et le troisième circuit de conversion formant un onduleur peuvent être commandés en mode réversible sans ajout significatif de composant. Le mode de fonctionnement réversible permet de réduire le volume et le coût en évitant l'utilisation d'un chargeur 2 supplémentaire.

En mode réversible, le convertisseur 49 comporte des moyens de redressement pour redresser une tension fournie par le réseau 4. Par exemple, des diodes de protection connectées en sens inverse dans des semi-conducteurs de puissance peuvent faire fonction de redresseurs. Le convertisseur 43 convertit la tension redressée fournie par le convertisseur 49 fonctionnant en redresseur en courant haute fréquence alimentant le transformateur 46 sur un enroulement 52 coté réseau. L'enroulement 51 coté batterie est connecté à des semi-conducteurs de puissance pour redresser et/ou réguler la charge de la batterie. En mode réversible de fonctionnement en chargeur, des commandes de synchronisation peuvent permettre de réguler en tension et/ou en courant la charge de la batterie.

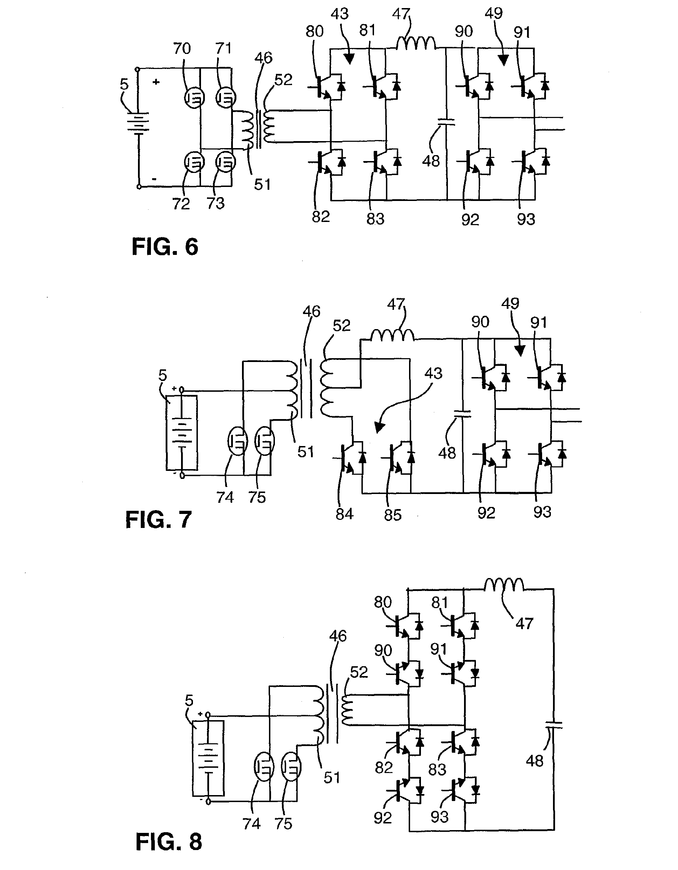

Les modes de réalisation des premiers et des seconds circuits de conversion peuvent être divers, les figures 6 à 12 montrent selon les cas des schémas préférentiels de combinaisons de convertisseurs.

Sur la figure 6, le transformateur 46 a un enroulement 51 simple connecté à un pont de quatre transistors 70, 71, 72, et 73 pour convertir la tension continue de la batterie en courant ou en tension alternatifs haute fréquence. L'enroulement 52 du transformateur est aussi un enroulement simple connecté à un pont de quatre transistors 80, 81, 82, 83 formant le premier convertisseur haute fréquence. Chaque transistor 80 à 83 peut avoir une diode connectée en parallèle et en inverse pour participer au fonctionnement en redresseur et en convertisseur. Le premier convertisseur basse fréquence 49 comporte des transistors 90, 91, 92, et 93 connectés en pont. Les transistors 90 à 93 peuvent avoir des diodes connectées en parallèle et en inverse pour fonctionner en redresseur en mode réversible.

Sur la figure 7, le transformateur 46 a un enroulement 51 à point milieu connecté à deux transistors 74, 75 pour convertir la tension continue de la batterie en courant ou en tension alternatifs haute fréquence. L'enroulement 52 du transformateur est un enroulement à point milieu, les sorties extrêmes étant connectées à deux transistors 84, 85 le premier convertisseur haute fréquence, et le point milieu étant connecté à l'inductance 47. Chaque transistor 84 et 85 peut avoir une diode connectée en parallèle et en inverse pour participer au fonctionnement en redresseur et en convertisseur. Le premier convertisseur basse fréquence 49 est le même que celui de la figure 6.

Sur la figure 8, le transformateur 46 a un enroulement 51 à point milieu connecté à deux transistors 74, 75 pour convertir la tension continue de la batterie en courant ou en tension alternatifs haute fréquence. L'enroulement 52 du transformateur est un enroulement simple connecté à un pont de huit transistors 80, 81, 82, 83 et 90, 91, 92, 93 formant le premier convertisseur haute fréquence, et le premier convertisseur basse fréquence. Ainsi, chaque bras du pont comporte un couple de deux transistors 80, 90 ; 81, 91 ; 82, 92 et 83, 93 connectés en série. Dans ce cas, le premier convertisseur haute fréquence et le premier convertisseur basse fréquence sont associés. Chaque transistor 80 à 83 et 90 à 93 peut avoir une diode connectée en parallèle et en inverse.

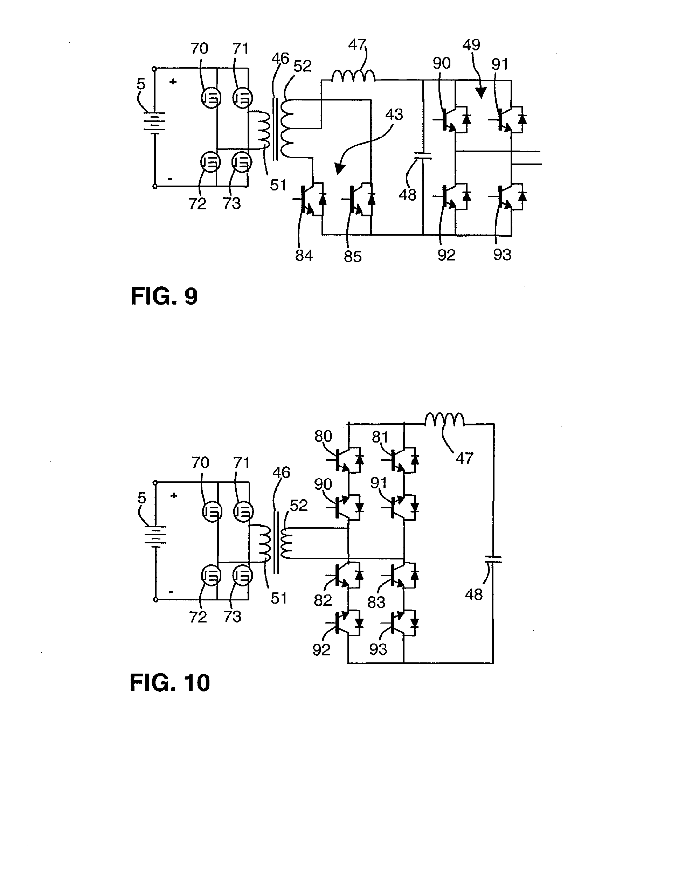

Sur la figure 9, le transformateur 46 a un enroulement 51 simple, le convertisseur 40 a un pont de quatre transistors 70 à 73, et le convertisseur 49 a un pont comme sur la figure 6, et le convertisseur 43 a deux transistors connectés a un enroulement à point milieu comme sur la figure 7.

Sur la figure 10, le transformateur 46 a un enroulement 51 simple, le convertisseur 40 a un pont de quatre transistors 70 à 73. L'enroulement 52 du transformateur est un enroulement simple connecté à un pont de huit transistors 80, 81, 82, 83 et 90, 91, 92, 93 formant le premier convertisseur haute fréquence, et le premier convertisseur basse fréquence comme sur la figure 8.

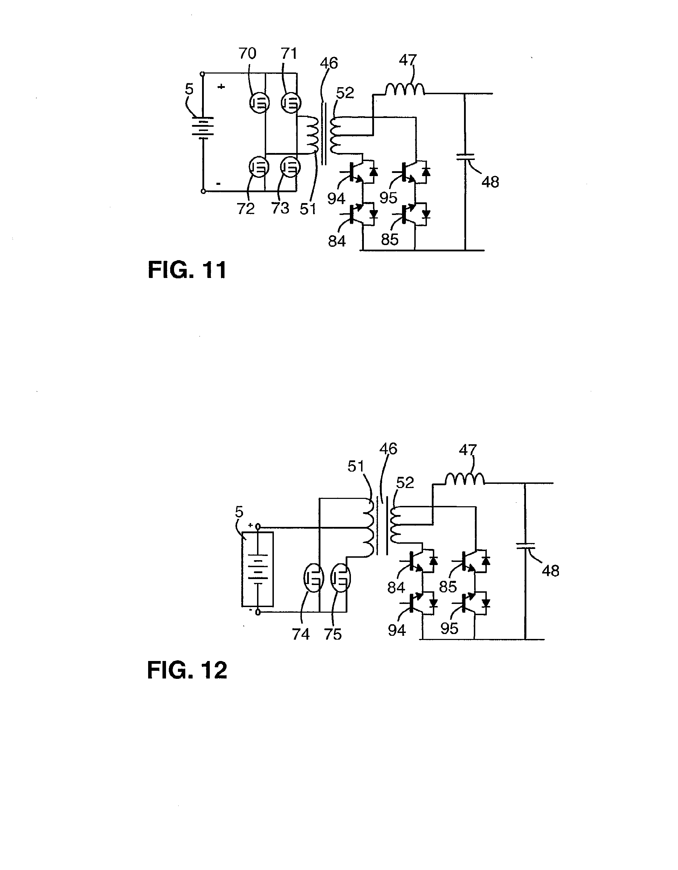

Sur les figures 11 et 12, les convertisseurs 40 sont comme les convertisseurs des figures 6 et 7 respectivement. Les transformateurs 46 ont des enroulements 52 à point milieu connectés à l'inductance 47. Les sorties extrêmes de l'enroulement 52 sont connectées à des couples de transistors 84, 94 et 85, 95 pour former le premier convertisseur haute fréquence et le premier convertisseur basse fréquence.

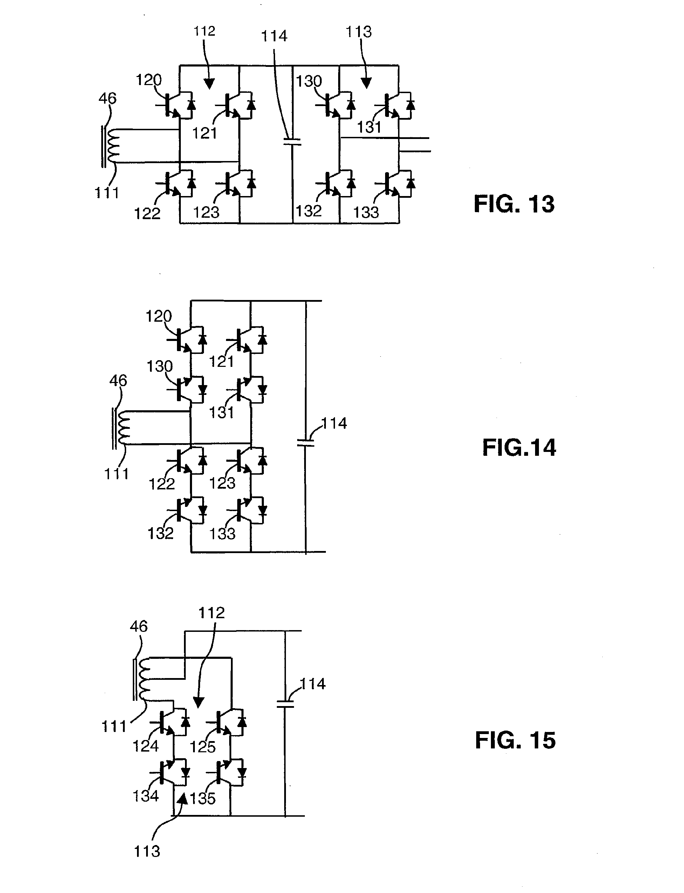

Les figures 13 à 15 représentent des variantes de seconds circuits de conversion mis en oeuvre dans des conditionneurs selon des modes de réalisation de l'invention. Sur la figure 13, le second enroulement 111 du transformateur est un enroulement simple connecté au second convertisseur 112 comportant un pont de quatre transistors 120, 121, 122 et 123 du second convertisseur. Le second convertisseur 113 basse fréquence est connecté en sortie du convertisseur 112. Il comporte un pont de quatre transistor 130, 131, 132 et 133.

Sur la figure 14, le second enroulement 111 est un enroulement simple connecté à un pont de huit transistors 120, 121, 122, 123 et 130, 131, 132, 133 formant le second convertisseur haute fréquence et le second convertisseur basse fréquence. Ainsi, chaque bras du pont comporte un couple de deux transistors 120, 130 ; 121, 131 ; 122, 132 et 123, 133 connectés en série. Dans ce cas, le second convertisseur haute fréquence et le second convertisseur basse fréquence sont associés. Chaque transistor 120 à 123 et 130 à 133 peut avoir une diode connectée en parallèle et en inverse.

Sur la figure 15, le second enroulement 111 est un enroulement à point milieu connecté en sortie au condensateur 114. Les sorties extrêmes de l'enroulement 111 sont connectées à des couples de transistors 124, 134 et 125, 135 pour former le second convertisseur haute fréquence et le second convertisseur basse fréquence.

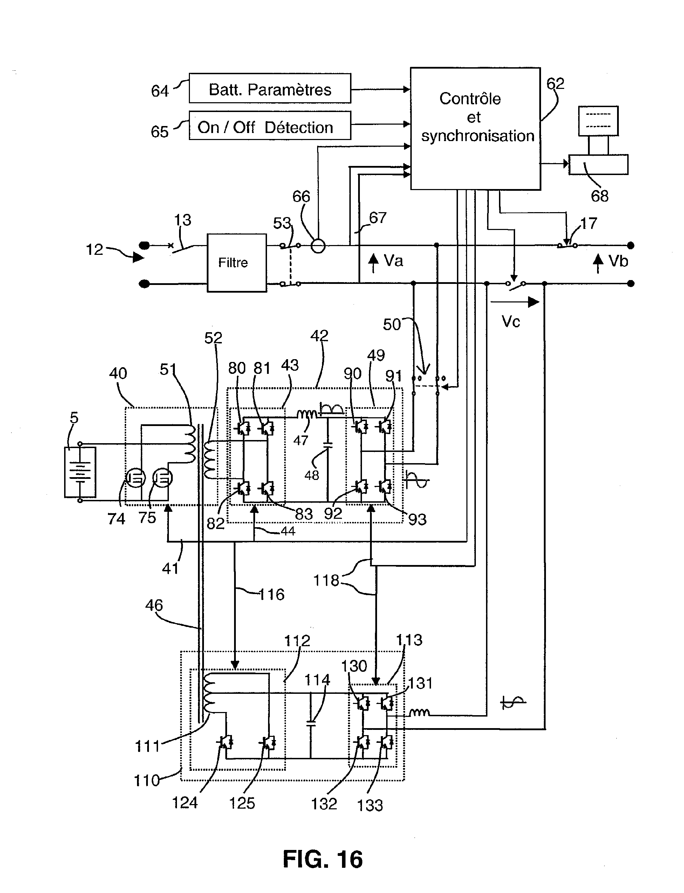

La figure 16 représente un schéma bloc d'un conditionneur de réseau comportant un circuit 62 de contrôle centralisé. Ce circuit comporte des moyens de synchronisation et fournit des commandes 41, 44, et 116 de synchronisation respectivement aux convertisseurs haute fréquence 40, 43 et 112. le circuit de contrôle 62 fournit aussi un signal de commande 118 aux convertisseurs basse fréquence 49 et 113 pour commander les fonctions de conversion, de redressement en mode de fonctionnement réversible, et de sens d'application de la tension Vc de compensation.

Le circuit de contrôle 62 reçoit sur une entrée des paramètres 64 de la batterie. Ces paramètres peuvent être stockés en mémoire. Ils permettent de contrôler la charge et la décharge de la batterie selon le type de batterie utilisée. Une autre entrée du circuit de contrôle permet de recevoir des informations 65 sur des états des interrupteurs, notamment le marche-arrêt connectés au réseau. Un capteur de courant 66 fournit au circuit de contrôle 62 un signal représentatif d'un courant circulant dans au moins un conducteur du réseau.

Un signal 67 représentatif d'une tension dans le réseau est également fournie au circuit de contrôle 62 pour contrôler notamment le fonctionnement des divers convertisseurs. Une sortie du circuit de contrôle peut être reliée à une interface 68 homme-machine, notamment pour contrôler les paramètres de fonctionnement, pour commander les modes de fonctionnement. L'interface 68 peut aussi être une centrale ou un ordinateur distant reliés par un réseau de communication permettant de recueillir des informations ou de transmettre des commandes.

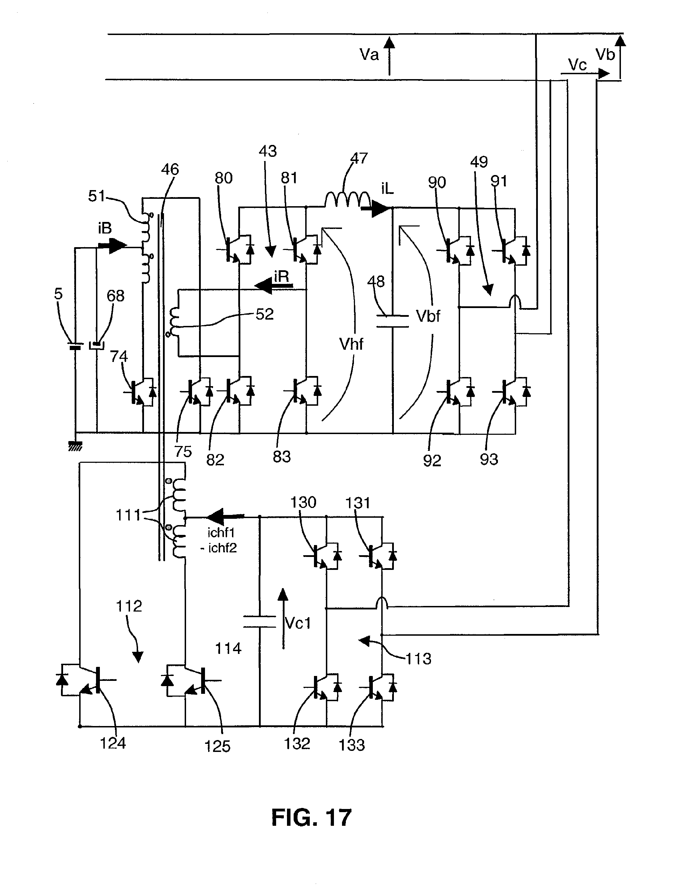

La figure 17 représente un schéma détaillé des circuits de puissance de circuits de conversion d'un conditionneur de réseau selon un mode de réalisation de l'invention. Sur ce schéma, une première borne de la batterie 5 est connectée à un point milieu d'un enroulement 51 coté batterie d'un transformateur 46, les extrémités de l'enroulement 51 étant connectées à des transistors 74 et 75 bouclés sur une seconde borne de la batterie. Un condensateur de découplage 68 est connecté en parallèle sur la batterie 5. Le courant sortant par la batterie ou le condensateur 68 est référencé iB.

Un enroulement 52 du transformateur 46 est connecté à un pont de quatre transistors 80, 81, 82, et 83 faisant office de premier convertisseur haute fréquence 43. Le courant circulant dans l'enroulement 52 est référencé iR. A la sortie du redresseur une tension est référencée Vhf, elle représente un hachage haute fréquence de la tension par les transistors 80 à 83. Une inductance 47 et un condensateur 48 sont connectés en sortie du premier convertisseur haute fréquence. En sortie de l'inductance, une tension basse fréquence est référencée vbf, elle a l'allure d'une sinusoïde redressée. Le courant dans l'inductance 47 est référencé iL. Un convertisseur 49 basse fréquence est connecté entre le premier convertisseur haute fréquence, notamment à travers l'inductance 47, et le réseau 4. La tension du réseau est référencée Va. Le convertisseur 49 basse fréquence est composé d'un pont de quatre transistors 90, 91, 92 et 93.

Un enroulement 111 du transformateur 46 a un point milieu connecté à une première borne d'un condensateur 114, les extrémités de l'enroulement 111 étant connectées à des transistors 124 et 125 bouclés sur une seconde borne du condensateur 114. Le courant circulant dans l'enroulement en mode ajout de tension de compensation est référencé ichf2 et le courant circulant dans l'enroulement en mode absorption ou soustraction de tension est référencé ichf1 La tension en sortie du second convertisseur haute fréquence est référencée Vc1 Le second convertisseur basse fréquence, connecté en sortie du second convertisseur haute fréquence, comporte un pont de quatre transistor 130, 131, 132, et 133 pour appliquer une tension de compensation Vc.

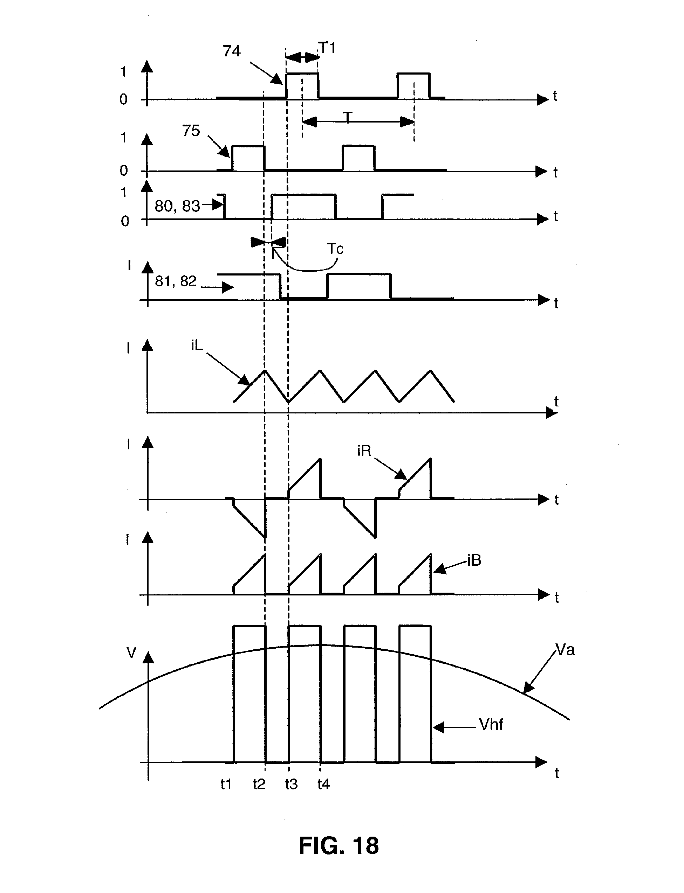

La figure 18 représente des signaux de courant et de tension dans un conditionneur selon la figure 17 fonctionnant en mode onduleur. Par exemple, entre des instants t1 et t2 les transistors 75, 81 et 82 sont conducteurs, le courant iL dans l'inductance augmente ainsi que le courant iR dans l'enroulement secondaire du transformateur dans le sens négatif et le courant iB sortant de la batterie, puisqu'il y a un transfert d'énergie depuis la batterie vers le réseau. La tension vhf est à l'état haut, sa valeur de crête dépend du rapport de transformation des enroulements du transformateur 46. A l'instant t2 le transistor 75 devient bloqué et le courant iL dans l'inductance 47 décroît par une circulation en roue libre dans les diodes des transistors, les courants iR et iB deviennent nuls ou très bas, et la tension vhf passe aussi à un niveau très bas. Les transistors 75 et le couple 81, 82 ont un fonctionnement synchrone puisqu'ils sont conducteurs en même temps. Pour éviter des risques de court circuits lors de l'enchaînement de cycles, les transistors 80 et 83 sont commandés en conduction lors d'un cycle suivant après un temps Tc dit de cuvette. Ce temps Tc est de préférence de l'ordre d'une microseconde. Les transistors 81 et 82 sont bloqués aussi avant la mise en conduction du transistor 74 à un instant t3.

Entre l'instant t3 et un instant t4, les transistors 74, 80 et 83 sont conducteurs en même temps pour un fonctionnement synchrone, la tension vhf est haute et le courant iL dans l'inductance 47 augmente ainsi que les courants iR et iB. Après l'instant t4, le transistor 74 est bloqué et le courant dans l'inductance 47 décroît. Des durées de conduction T1 des transistors 74 et 75 par rapport à une période de cycle T permettent de contrôler le courant iL de manière à former une tension vbf basse fréquence sensiblement sinusoïdale redressée en sortie de l'inductance 47.

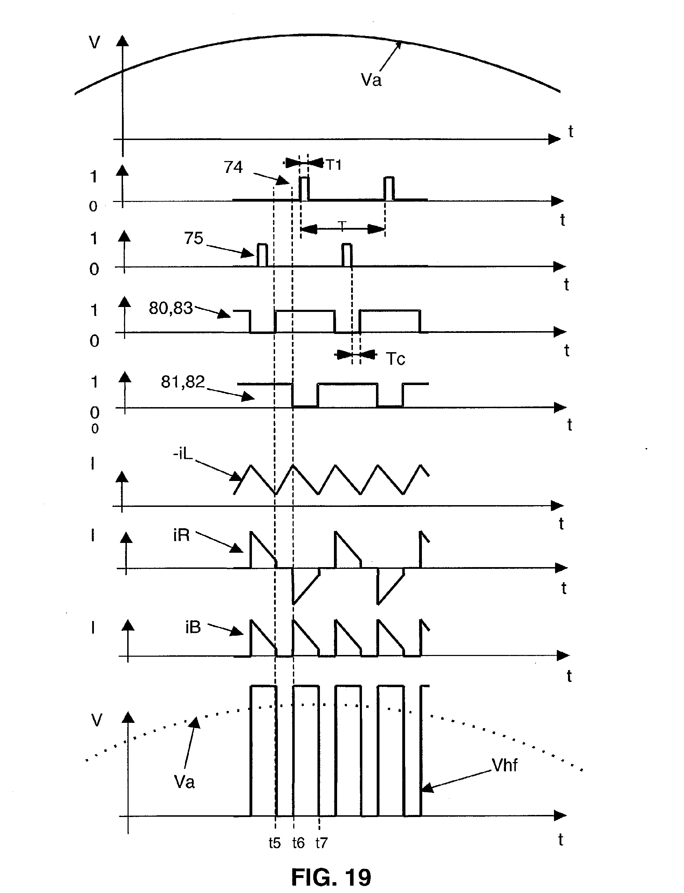

La figure 19 représente des signaux de courant et de tension dans un conditionneur selon la figure 17 fonctionnant en mode de charge de batterie d'accumulateur. Dans ce mode de fonctionnement réversible, les transistors 90 à 93 sont bloqués, les diodes de protection des transistors connectées en inverse servent de redresseur pour redresser la tension alternative du réseau.

Dans ce mode de charge de batterie, le transfert d'énergie peut se faire par exemple en deux phases. Une première phase de chargement de courant dans l'inductance 47, entre des instants t5 et t6, pendant laquelle les transistors 80 à 83 sont conducteurs. L'inductance 47 reçoit la tension redressée du réseau et le courant -iL augmente, les courants iR et iB sont nuls ou faibles. Puis une seconde phase de transfert de courant où l'énergie est transférée vers l'enroulement coté batterie. Dans 1a seconde phase, par exemple, les transistors 80 et 83 sont conducteurs et les transistors 81 et 82 sont bloqués, l'enroulement 46 est traversé par un courant iR fourni par l'inductance 47, et un courant iB peut être fourni à la batterie lorsque les transistors 74 ou 75, selon le sens du courant, sont conducteurs pendant une période T1. La durée de la période T1 est avantageusement utilisée pour réguler la charge de la batterie. Pendant le transfert d'énergie entre les instants t6 et t7, les courants iL et iR sont décroissants. Entre le blocage des transistors 74 ou 75 et la mise en conduction des transistors 81, 82 et des transistors 80, 83 respectivement, un temps Tc dit de cuvette est utilisé pour éviter des courts circuits.

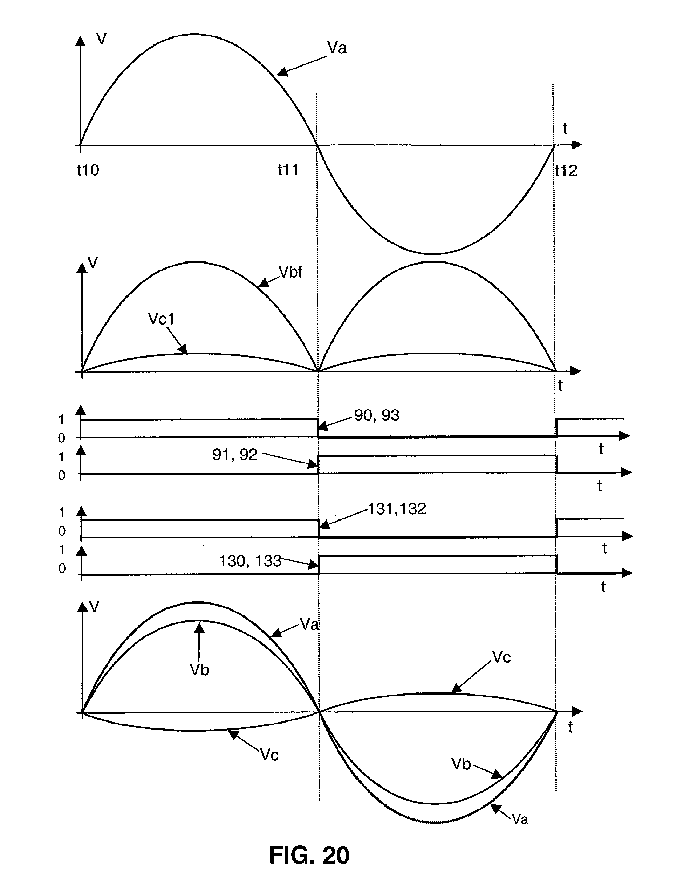

La figure 20 représente des signaux de courant et de tension dans un conditionneur fonctionnant avec une tension de compensation soustraite. Sur une première alternance d'une tension alternative basse fréquence d'un réseau entre des instants t10 et t11, la tension Va a une valeur plus élevée que sa valeur nominale. Ainsi, pour soustraire une tension de compensation Vc et avoir une tension Vb stable et de valeur précise, les transistors 90 et 93 sont commandés en conduction, les transistors 91 et 92 sont bloqués, les transistors 131 et 132 sont conducteurs et les transistors 130 et 133 sont bloqués.

Sur la seconde alternance d'une tension alternative basse fréquence d'un réseau, entre l'instant t11 et un instant t12, la tension Va est inversée et la tension Vc à soustraire doit être aussi inversée. Ainsi, pour soustraire une tension de compensation Vc, les états des transistors sont inversés, le transistor 90 est bloqué, le transistor 91 est conducteur, le transistor 131 est bloqué et le transistor 130 est conducteur.

Pour avoir un rapport de transformation approprié, le rapport entre les enroulements 111 et 52 est de l'ordre de 1/5 soit une tension Vc de 1/5 à 1/20 de la tension Vbf.

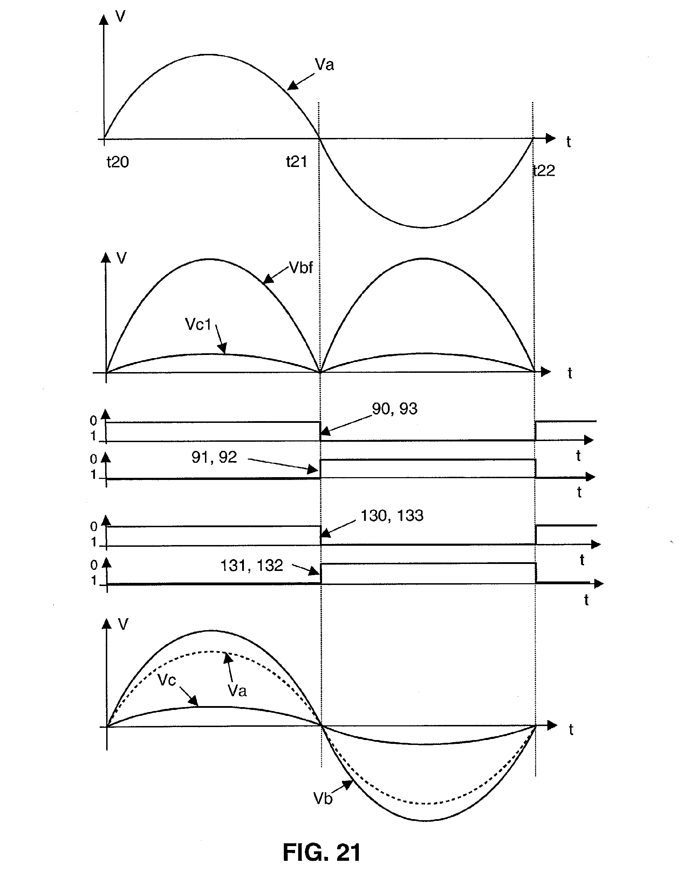

La figure 21 représente des signaux de courant et de tension dans un conditionneur fonctionnant avec une tension de compensation ajoutée. Sur une première alternance d'une tension alternative basse fréquence d'un réseau, entre des instants t20 et t21, la tension Va a une valeur plus basse que sa valeur nominale. Ainsi, pour ajouter une tension de compensation Vc et avoir une tension Vb stable et de valeur précise, les transistors 90 et 93 sont commandés en conduction, les transistors 91 et 92 sont bloqués, les transistors 130 et 133 sont conducteurs et les transistors 131 et 132 sont bloqués.

Dans cette configuration, une tension basse fréquence vbf redressée est fournie par le premier convertisseur basse fréquence 49. Puis, le premier convertisseur haute fréquence 43 génère une tension haute fréquence vhf et alimente à travers le transformateur 46 le second convertisseur haute fréquence pour générer une tension vc1 La tension vc1 a une forme de sinusoïde redressée, elle est alors orientée par le second convertisseur basse fréquence vers le réseau pour ajouter une tension Vc de compensation.

Sur une seconde alternance d'une tension alternative basse fréquence d'un réseau entre l'instant t21 et un instant t22, la tension Va est inversée et la tension Vc à ajouter doit être aussi inversée. Ainsi, pour ajouter une tension de compensation Vc, les état des transistors sont inversés, le transistor 90 est bloqué, le transistor 91 est conducteur, le transistor 131 est conducteur et le transistor 130 est bloqué. De la même façon, une tension basse fréquence vbf redressé est utilisée dans le premier convertisseur haute fréquence 43 pour transférer l'énergie électrique vers le second circuit de conversion 110.

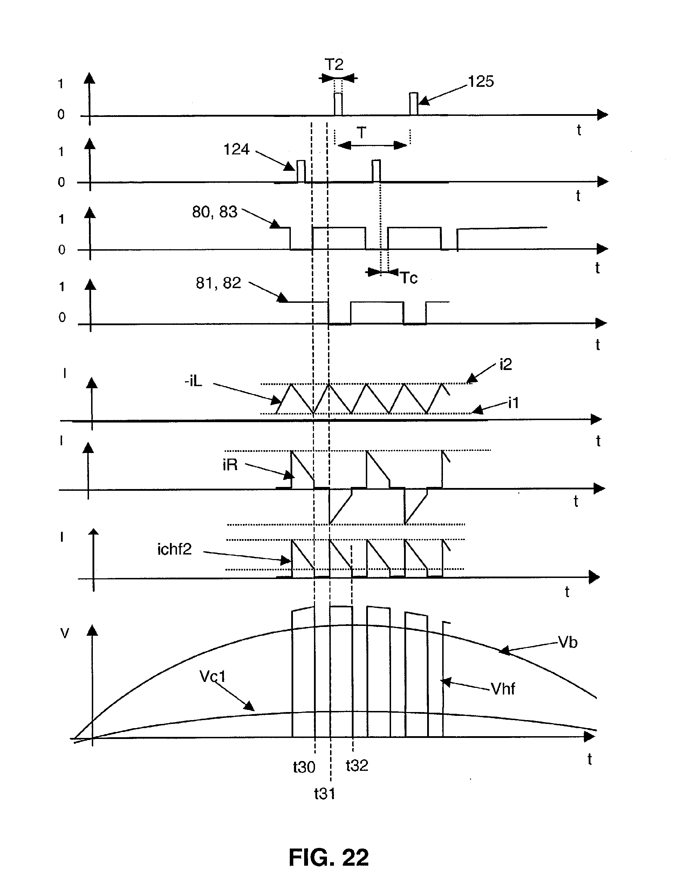

La figure 22 représente des signaux de courant, de tension et de commande haute fréquence dans un conditionneur ou la tension de compensation est ajoutée. Dans ce cas, le convertisseur 49 basse fréquence fonctionne en redresseur, des diodes de protection des transistors 90 à 93 peuvent servir à redresser la tension alternative du réseau.

Le transfert d'énergie peut se faire en deux phases. Une première phase de chargement de courant iL dans l'inductance 47, entre des instants t30 et t31, pendant laquelle les transistors 80 à 83 sont conducteurs. Dans cette phase, le courant iL passe d'une valeur basse i1 à une valeur élevée i2. L'inductance 47 reçoit la tension redressée du réseau, le courant -iL augmente, les courants iR dans l'enroulement 52 et ichf2 dans le second convertisseur haute fréquence sont nuls ou faibles. Puis dans une seconde phase de transfert, entre des instants t31 et t32, le courant ou l'énergie sont transférés vers l'enroulement 111 et le second convertisseur 110. Dans cette seconde phase, les transistors 80 et 83 sont conducteurs et les transistors 81 et 82 sont bloqués, l'enroulement 52 est traversé par un courant iR fourni par l'inductance et un courant ichf2 traverse l'enroulement 111 lorsque les transistors 124 ou 125, selon le sens du courant sont conducteur pendant une période T2. La période T2 est avantageusement utilisée pour réguler la valeur de la tension vc1 et la tension Vc de compensation. Pendant la phase de transfert, les courants iL et iR sont décroissants. Entre le blocage des transistors 124 ou 125 et la mise en conduction des transistors 80, 83 ou des transistors 81, 82 respectivement, un temps dit de cuvette est utilisé pour éviter des court circuits.

Afin d'optimiser le fonctionnement du conditionneur de réseau la compensation est faite lorsque la tension s'écarte suffisamment par rapport à sa valeur nominale, par exemple lorsque la tension est inférieure à un seuil inférieur de compensation Vs2 ou supérieure à un seuil supérieur de compensation Vs3. Le mode de fonctionnement onduleur ou alimentation sans interruption est déclenché si la tension Va devient inférieure à un seuil bas Vs1 ou supérieure à un seuil haut Vs4. Des tensions supérieures au seuil Vs4 et qui ne peuvent pas être compensées peuvent être dangereuses pour une installation. Dans ce cas, le mode onduleur est sélectionné pour alimenter l'installation et l'isoler du réseau amont.

En mode fonctionnement normal et conditionneur par compensation, les convertisseurs peuvent être commandés aussi pour fonctionner en filtre actif et corriger des distorsions de tension par rapport à une forme sinusoïdale. Le mode filtre actif peut être par exemple un correcteur de forme ou un atténuateur de fréquences d'harmoniques.

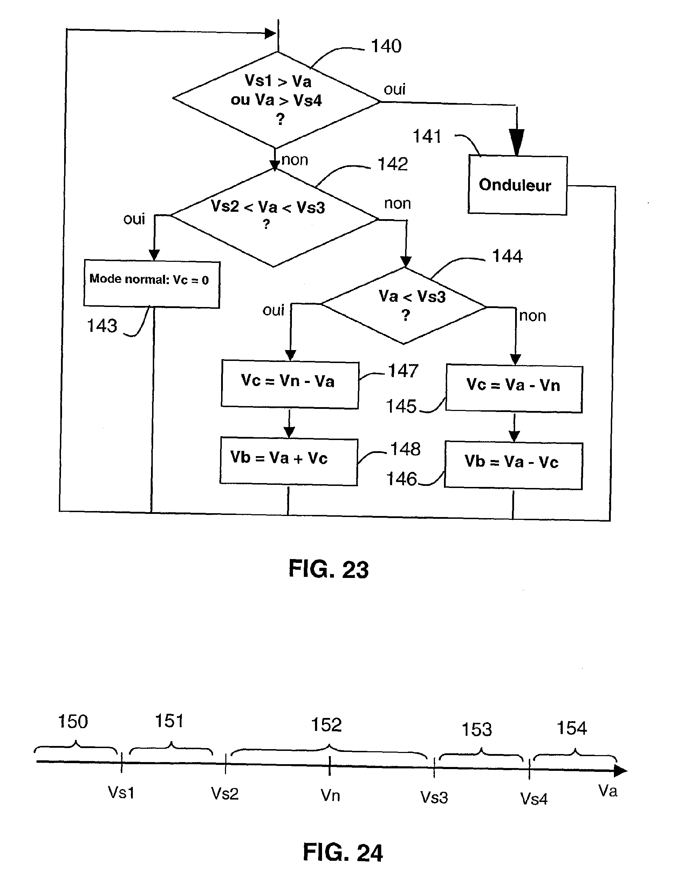

La figure 23 montrent un exemple d'organigramme de fonctionnement d'un conditionneur de réseau. Dans une étape 140 la tension Va est comparée à un seuil bas Vs1 et/ou un seuil haut Vs4 de tension pour déterminer si le mode de fonctionnement onduleur doit être choisi à une étape 141. Sinon, une étape 142 permet de contrôler le fonctionnement du mode de compensation. Ainsi, si la tension Va est comprise entre un seuil inférieur de compensation Vs2 et un seuil supérieur de compensation Vs3, le conditionneur ne compense pas la tension et fonctionne en mode normal à une étape 143. Si la condition de l'étape 142 n'est pas remplie, une étape 144 permet de détecter le sens de la compensation, par exemple en comparant la tension Va à un seuil Vs3. Dans le cas où Va est supérieure à Vs3, une valeur de tension de compensation est déterminée à une étape 145 telle que Vc=Va-Vn. Puis à une étape 146, la compensation se fait par soustraction telle que Vb=Va-Vc. Dans le cas où Va est inférieure à Vs3, une valeur de tension de compensation est déterminée à une étape 147 telle que Vc=Vn-Va. Puis à une étape 148, la compensation se fait par ajout telle que Vb=Va+Vc.

La figure 24 illustre les zones de mode de fonctionnement du conditionneur de réseau sélectionnées en fonction de 1a tension Va. Si la tension Va est inférieur au seuil bas Vs1, une zone 150 de fonctionnement en mode onduleur est sélectionnée. Si la tension Va est entre le seuil bas Vs1 et un seuil inférieur de compensation Vs2, une zone 151 de fonctionnement en mode de compensation est sélectionnée. Si la tension Va est entre le seuil inférieur de compensation Vs2 et un seuil supérieur de compensation Vs3, une zone 152 de fonctionnement en mode normal est sélectionnée sans compensation ni fourniture d'énergie par onduleur. Si la tension Va est entre le seuil supérieur de compensation Vs3 et un seuil haut Vs4, une zone 153 de fonctionnement en mode de compensation est sélectionnée. Si la tension Va est supérieure au seuil haut Vs4, une zone 154 de fonctionnement en mode onduleur est sélectionnée.

Les courbes des signaux des figures 18, 19 et 22 représentent des indications et des allures. Elles ne tiennent pas compte des valeurs des courants et des tensions, ni des rapports de transformation des enroulements des transformateurs.

Les différents seuils utilisés dans les modes de réalisation et les modes de fonctionnement décrits ci-dessus peuvent être compris de préférence en valeurs efficaces, mais aussi dans d'autre type de valeurs notamment moyennes ou instantanées. Ces seuils peuvent aussi comporter un cycle d'hystérésis et/ou être variables dans le temps ou paramétrables.

Les semi-conducteurs de puissance représentés sur les schémas sont des transistors bipolaires, mais d'autres types de transistors peuvent être utilisés, notamment des transistors à effet de champ (MOS) ou des transistors à grille isolée (IGBT).

Les commandes des semi-conducteurs se font de préférence par des signaux à modulation de largeur d'impulsions. Les fréquences des convertisseurs haute fréquence sont de préférence entre 10 kilohertz (10 kHz) et cent kilohertz (100 kHz). Les circuits de conversions peuvent être regroupés sur un même circuit imprimé ou répartis sur plusieurs circuits. Les signaux de commandes peuvent être fournis par de circuits logiques ou analogiques discrets, ou de préférence par in circuit microcontrôleur intégré.

## Revendications

1. Conditionneur de réseau comportant des moyens de transformation ayant au moins une entrée (31) destinée à être connectée à un réseau électrique (4) et au moins une sortie (32) ayant deux lignes destinées à être connectées en série dans une ligne (35) de distribution pour appliquer une tension de compensation (Vc) destinée à compenser des variations de tension d'une ligne de réseau, conditionneur **caractérisé en ce que** les moyens de transformation comportent :
- des premiers moyens de conversion (42) connectés à ladite entrée (31) et comportant un premier convertisseur (43) haute fréquence,
- des seconds moyens de conversion (110) connectés à ladite sortie (32) pour appliquer la tension de compensation et comportant un second convertisseur (112) haute fréquence, et
- un transformateur (46) haute fréquence comportant un premier enroulement (52) connecté audit premier convertisseur (43) haute fréquence et un second enroulement (111) connecté audit second convertisseur (112) haute fréquence.

2. Conditionneur selon la revendication 1 **caractérisé en ce qu'**il comporte des moyens de synchronisation (45, 62) connectés au premier convertisseur (43) haute fréquence et au second convertisseur (112) haute fréquence pour fournir des signaux (41, 44, 116) de synchronisation.

3. Conditionneur selon l'une des revendications 1 ou 2 **caractérisé en ce qu'**au moins un semi-conducteur de puissance (80-85) du premier convertisseur (43) haute fréquence est commandé en conduction pendant la conduction d'au moins un semi-conducteur de puissance (120-125) du second convertisseur (112) haute fréquence.

4. Conditionneur selon l'une quelconque des revendications 1 à 3 **caractérisé en ce que** les premiers moyens de conversion (42) comportent un premier convertisseur (49) basse fréquence et les seconds moyens de conversion (110) comportent un second convertisseur (113) basse fréquence.

5. Conditionneur selon la revendication 4 **caractérisé en ce que** le premier convertisseur basse fréquence (49) est associé audit premier convertisseur haute fréquence (43).

6. Conditionneur selon la revendication 4 **caractérisé en ce que** les premiers moyens de conversion comportent une inductance (47) connectée entre le premier convertisseur (43) haute fréquence et le premier convertisseur (49) basse fréquence.

7. Conditionneur selon l'une quelconque des revendications 4 à 6 **caractérisé en ce que** le second convertisseur basse fréquence (113) est associé audit second convertisseur (112) haute fréquence.

8. Conditionneur selon l'une quelconque des revendications 1 à 7 **caractérisé en ce que** les premiers moyens de conversion (42) sont réversibles.

9. Conditionneur selon l'une quelconque des revendications 1 à 7 **caractérisé en ce que** les seconds moyens de conversion (110) sont réversibles.

10. Conditionneur selon l'une quelconque des revendications 1 à 9 **caractérisé en ce que** le second convertisseur (113) basse fréquence est commandé pour orienter une tension (Vc) de compensation en l'additionnant ou en la soustrayant à une tension (Va) d'entrée.

11. Conditionneur selon l'une quelconque des revendications 1 à 10 **caractérisé en ce qu'**il comporte des troisièmes moyens de conversion (40) connectés à un troisième enroulement (51) dudit transformateur (46) haute fréquence et à des moyens de stockage (5) d'énergie électrique.

12. Conditionneur selon la revendication 11 **caractérisé en ce que** les premiers moyens de conversion (42), le transformateur haute fréquence (46) et les troisièmes moyens de conversion (40) permettent de charger les moyens de stockage dans un mode de fonctionnement chargeur réversible.

13. Conditionneur selon la revendication 12 **caractérisé en ce que** les premiers moyens de conversion (42), le transformateur (46) haute fréquence et les troisièmes moyens de conversion (40) permettent de convertir une tension des moyens de stockage (5) en une tension alternative à fournir à un réseau (4) dans un mode de fonctionnement onduleur réversible.

14. Conditionneur selon la revendication 13 **caractérisé en ce que** le premier convertisseur (43) haute fréquence et les troisièmes moyens de conversion (40) reçoivent des signaux de synchronisation (41, 44) pour faire fonctionner le premier convertisseur (43) haute fréquence en redresseur synchrone.

15. Conditionneur selon l'une quelconque des revendications 1 à 14 **caractérisé en ce qu'**il comporte des moyens de contrôle (62) pour commander les premiers, les seconds et les troisièmes moyens de conversion (42, 110 et 40) en mode de fonctionnement conditionneur, en mode de fonctionnement chargeur ou en mode de fonctionnement onduleur.

16. Conditionneur selon la revendication 15 **caractérisé en ce que** les moyens de contrôle (62) comportent des moyens de commande :
- pour commander les premiers et les seconds moyens de conversion (42, 110) en mode de fonctionnement conditionneur si une tension d'entrée (Va) est entre un premier seuil (Vs1) et un second seuil (Vs2) et entre un troisième seuil (Vs3) et un quatrième seuil (Vs4),
- pour commander les premiers, les seconds et les troisièmes moyens de conversion (42, 40) en mode de fonctionnement onduleur si ladite tension d'entrée (Va) est inférieure audit premier seuil (Vs1) et supérieure audit quatrième seuil (Vs4), et
- pour sélectionner un mode fonctionnement normal si ladite tension d'entrée (Va) est entre le second seuil (Vs2) et le troisième seuil (Vs3).

17. Conditionneur selon l'une quelconque des revendications 1 à 16 **caractérisé en ce qu'**il comporte des moyens de contrôle (62) pour commander les premiers, les seconds et les troisièmes moyens de conversion (42, 40 110) en filtre actif pour corriger des distorsions de tension par rapport à une forme sinusoïdale.

18. Conditionneur selon l'une quelconque des revendications 1 à 17 **caractérisé en ce que** les premiers, les seconds et les troisièmes moyens de conversion comportent des semi-conducteurs de puissance comportant au moins un élément actif de type transistor (70-75, 80-85, 90-95, 120-125, 130-135) associé à une diode connectée en parallèle et en inverse.
